# EUROPÄISCHE PATENTSCHRIFT

(11) **EP 3 409 943 B1**
(45) Veröffentlichungstag und Bekanntmachung des Hinweises auf die Patenterteilung: **05.08.2020**
(21) Anmeldenummer: 18173921.0
(22) Anmeldetag: 23.05.2018
(51) Int. Cl.: F04B 1/0408, F04B 1/0448, F04B 53/14, F04B 15/00, F16J 15/52, B01F 15/02, A01J 11/16

(54) **PLUNGERPUMPE SOWIE VERWENDUNG EINER PLUNGERPUMPE**
PLUNGER PUMP AND USE OF A PLUNGER PUMP
POMPE À PISTON ET UTILISATION D'UNE POMPE À PISTON

(30) Priorität: 01.06.2017 DE 102017112110
(43) Veröffentlichungstag der Anmeldung: 05.12.2018
(73) Patentinhaber: Hammelmann GmbH, 59302 Oelde (DE)
(72) Erfinder: JARCHAU, Michael, 59302 Oelde (DE)
(74) Vertreter: Dantz, Jan Henning

(56) Entgegenhaltungen:
- EP-A2- 1 260 712
- DE-A1-102014 106 520
- GB-A- 656 498
- US-A- 4 556 369
- US-A1- 2013 039 788

## Beschreibung

Die Erfindung betrifft eine Plungerpumpe nach dem Oberbegriff des Anspruchs 1 sowie die Verwendung einer Plungerpumpe.
Derartige Plungerpumpen sind hinlänglich bekannt. Beispielhaft wird auf die EP 1 260 712 B1 verwiesen, bei der mehrere, d.h. konkret drei Plunger mittels eines Getriebes antreibbar sind, wobei die Plunger um 120° versetzt auf einer Kurbelwelle gelagert sind. Durch diese Plungeranordnung werden dynamische Kräfte ausgeglichen und insbesondere eine Förderstrompulsation verringert.
Zur hermetischen Abdichtung eines Zwischenraumes zu einem Getrieberaum ist ein den Plunger teilweise umhüllender Faltenbalg vorgesehen, der einerseits am Plunger und andererseits an einer Begrenzungswand befestigt ist.
Druckseitig ist der Plunger in einer berührungslosen Dichtungsanordnung geführt, die einen Saugraum von einem Druckraum trennt, wobei einem Pumpenkopf zugeordnet ein Saugventil und ein Druckventil vorgesehen sind.
Prinzipiell hat sich die aus der EP 1 260 712 B1 bekannte Plungerpumpe bewährt.
Für bestimmte Einsatzgebiete, insbesondere für die Homogenisierung von flüssigen Lebensmitteln, beispielsweise von Milch, kommen ebenfalls Plungerpumpen zum Einsatz, deren Plunger in einer berührenden Dichtungsanordnung geführt ist. Eine solche Plungerpumpe ist in der EP 2 941 567 B1 offenbart.
Der Betrieb dieser Plungerpumpe für den genannten Einsatz zeigt sich jedoch als unbefriedigend und vor allem den gestellten hygienischen und aseptischen Ansprüchen nicht gerecht werdend dar.
Durch die berührende Dichtung, bestehend aus mindestens einem am Plunger anliegenden Dichtungsring aus einem relativ weichen Dichtungsmaterial, lösen sich aufgrund der oszillierenden Bewegung des Plungers Abriebspartikel, die in den Saugraum gelangen und damit in die zu homogenisierende Milch. Diese Verunreinigung ist aus hygienischer Sicht nicht akzeptabel und führt letztendlich dazu, dass das Fluid nicht weite verwendet werden kann.

Unabhängig davon ist diese Plungerpumpe so konzipiert, dass der Plunger bei jedem Saughub teilweise in einen septischen Bereich gelangt, wobei sich Keime an der Oberfläche des Plungers anlagern können, die beim folgenden Druckhub mit dem Fluid in Kontakt geraten, so dass auch daraus die Gefahr erwächst, dass die Milch in unzulässiger Weise kontaminiert wird. Um dies zu verhindern, wird der entsprechende Bereich während der gesamten Produktionsdauer mit Dampf oder heißem Kondensat beaufschlagt, was jedoch nur mit einem entsprechend hohen und kostenintensiven Aufwand möglich ist.

In diesem Sinn problematisch gestaltet sich auch die Reinigung der Plungerpumpe zum Betrieb einer Homogenisiereinrichtung, da hierzu diverse Reinigungsmittel und -gerätschaften bereitgestellt werden müssen. Die Erzeugung von Dampf, gleichermaßen die Reinigung selbst, ist jedoch zeitaufwendig und stellt sich insbesondere in wirtschaftlicher Hinsicht als nachteilig dar, zumal solche Reinigungen in relativ kurzen Intervallen erforderlich sind.

In der DE 10 2014 106 520 A1 ist eine Plungerpumpe thematisiert, deren Plunger gegenüber einem räumlich abgetrennten Innenraum jeweils durch einen Faltenbalg hermetisch abgedichtet sind. Allerdings sind diese Faltenbälge, abweichend von der Gattung, nicht einerseits dicht am Plunger und andererseits im Bereich einer Durchführöffnung für den Plunger dicht an einer Begrenzungswand befestigt.

Eine von der Gattung abweichende Plungerpumpe, die keine berührungslose Dichtungsanordnung aufweist, in der der Plunger führbar ist, ist aus der US 2013/0039788 A1 bekannt.

Ein den Plunger teilweise umhüllender Faltenbalg steht in seinem Innenraum unter Atmosphärendruck und ist offen mit einer Kammer verbunden, die einerseits beim Zusammendrücken des Faltenbalgs bei einer entsprechenden Hubbewegung des Plungers das überschüssige Luftvolumen und andererseits ein aus einem Saugraum bei einer Leckage eintretendes Fluid aufnimmt.

Der Erfindung liegt die Aufgabe zugrunde, eine Plungerpumpe der gattungsgemäßen Art so weiterzuentwickeln, dass ihre Verwendungsfähigkeit verbessert wird.

Diese Aufgabe wird durch eine Plungerpumpe mit den Merkmalen des Anspruchs 1 gelöst.

Die Plungerpumpe gemäß der Erfindung kann nun überall dort eingesetzt werden, wo besondere hygienische Anforderungen an die Förderung eines Fluids bestehen oder wenn umweltproblematische Stoffe gefördert werden. In diesem Fall können durch die neue Ausgestaltung der Plungerpumpe diese Stoffe nicht in die Umgebung gelangen.

Der entscheidende Vorteil bei der erfindungsgemäßen Plungerpumpe liegt darin, dass der Bereich des Plungers, der funktionsbedingt mit der Umgebung außerhalb des zu fördernden Fluids liegt und von daher kontaminiert werden kann, gegenüber dem im Saugraum befindlichen zu fördernden Fluid mittels Faltenbalg hermetisch abgedichtet ist.

Damit findet eine solche Plungerpumpe idealerweise in einer Homogenisierungseinrichtung Verwendung.

Durch die Führung des Plungers in einer berührungslosen Dichtungsanordnung, die bevorzugt als Spaltdichtung gestaltet ist, ist das Entstehen von Abrieb, wie zum Stand der Technik beschrieben, ausgeschlossen.

Im Übrigen zeichnet sich die Plungerpumpe nach der Erfindung durch eine hohe Lebensdauer der Dichtelemente aus, die erfahrungsgemäß bei > 8000 Betriebsstunden liegt.

Weiter ist die Leistungsanpassung der Plungerpumpe an den spezifischen Einsatz anzupassen, vor allem hinsichtlich der Hubfrequenz, d.h. der Drehzahl der Kurbelwelle.

Für den genannten Einsatzzweck weist die berührungslose Dichtungsanordnung eine Führungshülse aus einem zugelassenen korrosionsbeständigen Hartmetall auf. Auch die übrigen Funktionsteile, soweit sie mit dem Fluid in Berührung kommen, sind bevorzugt aus rostfreiem Stahl hergestellt.

Die Plungerpumpe gemäß der Erfindung zeichnet sich des Weiteren durch ihre kompakte Bauweise aus, mit einem großen Hubvolumen, woraus sich eine Minimierung der Herstellungskosten ergibt beispielsweise gegenüber einer Membranpumpe.

Nach einem weiteren Gedanken der Erfindung ist die Ausgleichskammer gegenüber einem Antriebsraum, in dem das Getriebe angeordnet ist, abgedichtet, unter Bildung eines Zwischenraumes zwischen der Ausgleichskammer und dem Getrieberaum.

Der Zwischenraum selbst wiederum kann gegenüber dem Getrieberaum ebenfalls durch einen Faltenbalg abgedichtet sein, der einerseits am Plunger und andererseits an einer Begrenzungswand des Getrieberaums befestigt ist, so dass sich insgesamt eine Dreifachdichtung zwischen dem Getrieberaum und dem Saugraum ergibt, durch die eine Kontamination des im Saugraum befindlichen Fluids durch Schmierstoffe im Getrieberaum ausgeschlossen ist.

Gemäß der Erfindung ist der Druck des Mediums in der Ausgleichskammer gleich dem Fluidruck im Saugraum oder kleiner ist. Nach einer vorteilhaften Weiterbildung ist der in der Ausgleichskammer herrschende Druck 0,05 - 0,2 bar, vorzugsweise 0,1 bar kleiner als der Zulaufdruck des Fluids.

Selbst für den Fall, dass der Faltenbalg eine Leckage aufweist, wird das Fluid aufgrund des höheren Drucks in die Ausgleichskammer geleitet, so dass das darin befindliche Medium, bevorzugt ein inertes Gas, z.B. N₂, nicht in den Saugraum gelangt, wobei die Ausgleichskammer im Bereich der Durchführung des Plungers mit einer Lippendichtung zum unter Umgebungsdruck stehenden Zwischenraum abgedichtet ist.

Der dem Saugraum zugeordnete Faltenbalg besteht aus einem thermoplastischen Kunststoff, beispielsweise PTFE, oder einem Elastomerwerkstoff, der sich durch eine besondere Belastbarkeit, insbesondere eine lange Lebensdauer auszeichnet.

Mittels eines Regelkreises zur Überwachung und Einstellung des Differenzdrucks zwischen der Ausgleichskammer und dem Saugraum, kann eine Funktionsüberwachung des Faltenbalgs erfolgen.

Bei dessen Bruch kann die vorgegebene Druckdifferenz nicht mehr aufrechterhalten werden, was erfasst wird und zur Abschaltung führt.

Eine weitere Überwachung in dem dem Zwischenraum benachbarten Bereich der Ausgleichskammer detektiert ein Eindringen des Fluids. Dabei kann die Überwachung über die Erkennung des pH-Werts, der Leitfähigkeit, dem Füllstand, der Trübung oder ähnlichem erfolgen, wobei mehrere entsprechende Sensoren installiert und parallel aktiv sein können.

Saug- und Druckventilen zugeordnet ist ein Pumpenkopf vorgesehen, an den, bei Verwendung der Plungerpumpe in einer Homogenisiereinrichtung ein Homogenisierventil angeschlossen ist, in dem das unter Druck stehende Fluid zur Homogenisierung entspannt wird.

Eine Reinigung insbesondere der Spaltdichtung kann mittels Zwangsspülung erfolgen, indem durch das einstellbare Homogenisierventil ein Reinigungsfluid auf einen höheren Druck (50 - 100 bar) als nach dem Stand der Technik (5 - 6 bar) möglich, erzeugt wird. Das Homogenisierventil kann ohne höhere Antriebsleistung durch Drehzahlanhebung der Kurbelwelle wie ein nun nicht mehr erforderlich CIP-Pumpe (cleaning in place) wirken. Der sich einstellende Volumenstrom entspricht dem einer CIP-Pumpe allerdings mit geringerer Antriebsleistung als diese, aufgrund des besseren Wirkungsgrades.

Die Zwischenräume des Faltenbalges unterliegen einem Selbstreinigungseffekt durch radiale, oszillierende Volumenverdrängung während der Hubbewegung sowie einer geringen Haftneigung an der Oberfläche des vorzugsweise aus einem PTFE-Material bestehenden Faltenbalgs.

Weitere vorteilhafte Ausbildungen der Erfindung sind in den Unteransprüchen gekennzeichnet.

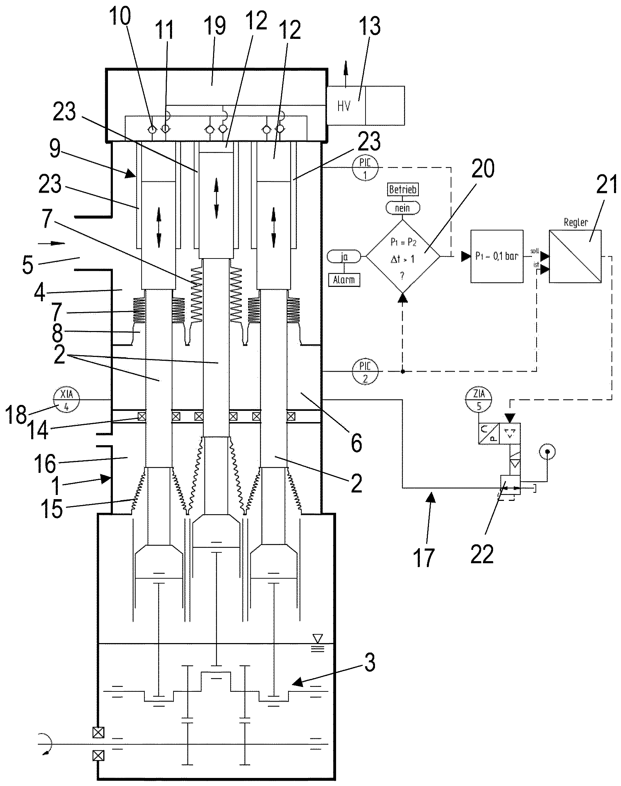

Ein Ausführungsbeispiel der erfindungsgemäßen Plungerpumpe wird nachfolgend anhand der beigefügten Zeichnung beschrieben.

Die einzige Figur zeigt eine Plungerpumpe in einer schematischen Schnittdarstellung.

In der Figur ist eine Plungerpumpe erkennbar, mit einem Gehäuse 1, das einen Getrieberaum 3 zur Aufnahme eines Getriebes, einen sich daran anschließenden Zwischenraum 16, eine Ausgleichskammer 6 sowie einen Saugraum 4 aufweist. An Letzteren ist eine Zuleitung 5 angeschlossen, über die ein unter Zulaudruck stehendes Fluid zuführbar ist, im Beispiel ein zu homogenisierendes Fluid, insbesondere Milch.

An einer nicht näher dargestellten Kurbelwelle des Getriebes sind drei Plunger 2 angeschlossen, und zwar in einem Winkelversatz von 120°, wobei die Plunger 2 im Betrieb oszillierend bewegt werden. Wie aus dem Stand der Technik bekannt können die Plunger 2 mehrteilig ausgebildet sein.

Der Einfachheit halber wird im Folgenden Bezug genommen lediglich auf einen Plunger 2, da die anderen Plunger bau- und funktionsgleich sind.

Der Plunger 2 ist mit einem Kopf in einer Führungshülse 23 einer Dichtungsanordnung 9 axial verschiebbar gelagert, die derart ausgebildet ist, dass sich zwischen dem Plunger 2 und der Führungshülse 23 eine berührungslose Dichtung, also eine Spaltdichtung ergibt, wie sie aus dem Stand der Technik bekannt ist.

Einem gebildeten Arbeitsraum 12 sind koaxial ein Saugventil10 und ein Druckventil 11 zugeordnet und zwar im Bereich eines das Gehäuse 1 verschließenden Pumpenkopfes 19, an den ein mit dem Druckventil 11 korrespondierendes Homogenisierventil 13 angeschlossen ist.

Ein saugraumseitiger Faltenbalg 7 umschließt einen Teilbereich des Plungers 2 im Saugraum 4 und ist einerseits dichtend am Plunger 2 und andererseits dichtend an einer Begrenzungswand 8 befestigt, die den Saugraum 4 von der Ausgleichskammer 6 trennt. Dabei überdeckt der saugraumseitige Faltenbalg 7 eine Durchtrittsöffnung der Begrenzungswand 8, durch die der Plunger 2 geführt ist.

Gemäß der Erfindung ist die Ausgleichskammer 6 mit einem Medium befüllt, unter einem Druck der gleich oder kleiner ist als der Fluiddruck im Saugraum 4, vorzugsweise 0,1 bar geringer.

Vorteilhafterweise kommt als Medium ein inertes Gas zum Einsatz, das im Übrigen einen Gegendruck im saugraumseitigen Faltenbalg 7 bewirkt zum Fluiddruck im Saugraum 4, der außenseitig des saugraumseitigen Faltenbalgs 7 anliegt.

Der Zwischenraum 16 ist im Bereich der durchgeführten Plunger 2 über Lippendichtungen 14 gegenüber der Ausgleichskammer 6 abgedichtet und gegenüber dem Getrieberaum 3 durch einen zwischenraumseitigen Faltenbalg 15, so dass zum Saugraum 4 eine redundante Dreifachdichtung zum Getrieberaum 3 gegeben ist, durch die wirksam verhindert wird, dass beispielsweise Getriebeöl in den Saugraum 4 gelangt.

Im Bodenbereich, also dem saugraumseitigen Faltenbalg 7 gegenüberliegend, ist in der Ausgleichskammer 6 eine Leckageerkennung 18 vorgesehen, beispielsweise ein Sensor, mittels der ein Eindringen von Fluid aus dem Saugraum 4 durch einen defekten Faltenbalg 7 in die Ausgleichskammer 6 erkennbar ist. Diese Leckageerkennung 18 kann über die Feststellung eines pH-Werts, der Leitfähigkeit, des Füllstandes, der Trübung oder dergleichen erfolgen. Denkbar ist auch die Anordnung mehrerer Sensoren, die parallel aktiv sein können.

Eine Regeleinrichtung 17, die eine Differenzdrucküberwachung 20, einen Regler 21 sowie ein Druckregelventil 22 mit Lageüberwachung aufweist, ist an den Saugraum 4 einerseits und an die Ausgleichskammer 6 andererseits angeschlossen.

Im Versagensfall des saugraumseitigen Faltenbalgs 7 findet ein Druckausgleich statt zwischen dem Saugraum 4 und der Ausgleichskammer 6 und die Druckdifferenz, besagte 0,1 bar, kann nicht mehr aufrechterhalten werden, was durch die Regeleinrichtung 17 erfasst wird und zur Abschaltung der Plungerpumpe führt.

### Bezugszeichenliste

- 1: Gehäuse
- 2: Plunger
- 3: Getrieberaum
- 4: Saugraum
- 5: Zuleitung
- 6: Ausgleichskammer
- 7: saugraumseitiger Faltenbalg
- 8: Begrenzungswand
- 9: Dichtungsanordnung
- 10: Saugventil
- 11: Druckventil
- 12: Arbeitsraum
- 13: Homogenisierventil
- 14: Lippendichtung
- 15: zwischenraumseitiger Faltenbalg
- 16: Zwischenraum
- 17: Regeleinrichtung
- 18: Leckageerkennung
- 19: Pumpenkopf
- 20: Differenzdruck-Überwachung
- 21: Regler
- 22: Druckregelventil
- 23: Führungshülse

## Patentansprüche

1. Plungerpumpe zur Förderung eines Fluids, mit mindestens einem oszillierend antreibbaren Plunger (2), der berührungslos in einer Dichtungsanordnung (9) geführt ist, die einen eine Zuleitung (5) aufweisenden Saugraum (4) von einem Arbeitsraum (12) trennt und einem den Plunger (2) bereichsweise hermetisch umschließenden Faltenbalg (7), der einerseits dicht am Plunger (2) und andererseits im Bereich einer Durchführöffnung für den Plunger (2) dicht an einer Begrenzungswand (8) befestigt ist, **dadurch gekennzeichnet, dass** dem Saugraum (4) benachbart eine zum inneren des Faltenbalgs (7) offene, in Funktion mit einem unter Druck stehenden Medium gefüllte Ausgleichskammer (6) angeordnet ist, wobei der Mediumdruck gleich oder kleiner ist als der außenseitig auf den Faltenbalg (7) wirkende Zulaufdruck des Fluids.

2. Plungerpumpe nach Anspruch 1 oder 2, **dadurch gekennzeichnet, dass** der Mediumdruck 0,05 bis 0,2 bar, vorzugsweise 0,1 bar, niedriger ist als der im Saugraum (4) herrschende Zulaufdruck des Fluids.

3. Plungerpumpe nach einem der vorhergehenden Ansprüche, **dadurch gekennzeichnet, dass** eine mit dem Saugraum (4) und der Ausgleichskammer (6) in Verbindung stehende Regeleinrichtung (17) vorgesehen ist, mit der eine Differenzüberwachung der Drücke in dem Saugraum (4) und der Ausgleichskammer (6) durchführbar ist.

4. Plungerpumpe nach einem der vorhergehenden Ansprüche, **dadurch gekennzeichnet, dass** mit der Ausgleichskammer (6) eine Leckageerkennung (18) in Wirkverbindung steht, mit der sich verändernde stoffliche Parameter des Mediums erkennbar ist.

5. Plungerpumpe nach einem der vorhergehenden Ansprüche, **dadurch gekennzeichnet, dass** zwischem einen eine Kurbelwelle eines Getriebes aufnehmenden Getrieberaum (3) und der Ausgleichskammer (6) ein Zwischenraum (16) vorgesehen ist, der gegenüber der Ausgleichskammer (6) und dem Getrieberaum (3) abgedichtet ist.

6. Plungerpumpe nach einem der vorhergehenden Ansprüche, **dadurch gekennzeichnet, dass** an einen Pumpenkopf (19), dem ein mit dem Arbeitsraum (12) in Verbindung stehendes Saugventil (10) und ein Druckventil (11) zugeordnet ist, ist ein Homogenisierventil (13) angeschlossen, das mit dem Arbeitsraum (12) über das Druckventil (11) in Verbindung steht.

7. Plungerpumpe nach einem der vorhergehenden Ansprüche, **dadurch gekennzeichnet, dass** mehrere, vorzugsweise drei unter gleichem Winkelabstand zueinander angeordnete Plunger (2) an der Kurbelwelle gehalten sind.

8. Plungerpumpe nach einem der vorhergehenden Ansprüche, **dadurch gekennzeichnet, dass** das Medium in der Ausgleichskammer (6) ein inertes Gas ist.

9. Verwendung der Plungerpumpe nach Anspruch 1 zur Druckerhöhung eines Fluids in einer Homogenisiereinrichtung.

## Claims

1. Plunger pump for conveying a fluid, having at least one plunger (2) which can be driven in an oscillating manner and is guided without contact in a sealing arrangement (9) which separates a suction chamber (4), which has a feed line (5), from a working chamber (12), and having a bellows (7) which hermetically surrounds the plunger (2) in certain regions, which on the one hand is fixed tightly to the plunger (2) and on the other hand is fixed tightly to a boundary wall (8) in the region of a feed-through opening for the plunger (2), **characterized in that** adjacent to the suction chamber (4), an equalizing chamber (6) is arranged which is open towards the interior of the bellows (7) and which is filled with a pressurized medium during operation, wherein the medium pressure is equal to or less than the inlet pressure of the fluid acting on the outside of the bellows (7).

2. Plunger pump according to claim 1 or 2, **characterized in that** the medium pressure is 0.05 to 0.2 bar, preferably 0.1 bar, lower than the inlet pressure of the fluid prevailing in the suction chamber (4).

3. Plunger pump according to one of the preceding claims, **characterized in that** a regulating device (17) is provided which is connected to the suction chamber (4) and the equalizing chamber (6) and with which differential monitoring of the pressures in the suction chamber (4) and the equalizing chamber (6) can be carried out.

4. Plunger pump according to one of the preceding claims, **characterized in that** a leakage detection device (18), with which changing material parameters of the medium can be detected, is in operative connection with the equalizing chamber (6).

5. Plunger pump according to one of the preceding claims, **characterized in that** an intermediate space (16) is provided between a gear chamber (3) accommodating a crankshaft of a transmission and the equalizing chamber (6), which intermediate space (16) is sealed with respect to the equalizing chamber (6) and the gear chamber (3).

6. Plunger pump according to one of the preceding claims, **characterized in that** a homogenizing valve (13) is connected to a pump head (19), to which a suction valve (10) communicating with the working chamber (12) and a pressure valve (11) are assigned, which homogenizing valve (13) communicates with the working chamber (12) via the pressure valve (11).

7. Plunger pump according to one of the preceding claims, **characterized in that** several, preferably three plungers (2) arranged at the same angular distance from one another are held on the crankshaft.

8. Plunger pump according to one of the preceding claims, **characterized in that** the medium in the equalizing chamber (6) is an inert gas.

9. Use of the plunger pump according to claim 1 for increasing the pressure of a fluid in a homogenizing device.

## Revendications

1. Pompe à piston plongeur pour le transport d'un fluide, comprenant au moins un piston plongeur (2) pouvant être entraîné en oscillation et guidé sans contact dans un agencement d'étanchéité (9) qui sépare une chambre d'aspiration (4) présentant une conduite d'alimentation (5) d'une chambre de travail (12), et comprenant un soufflet (7) entourant hermétiquement le piston plongeur (2) dans certaines zones, qui est fixé d'une part de manière étanche au piston plongeur (2) et d'autre part à une paroi de délimitation (8) dans la zone d'une ouverture de passage pour le piston plongeur (2), **caractérisée en ce qu'**au voisinage de la chambre d'aspiration (4) est disposée une chambre de compensation (6) ouverte vers l'intérieur du soufflet (7), qui est remplie d'un milieu sous pression pendant le fonctionnement, la pression du milieu étant égale ou inférieure à la pression d'arrivée du fluide agissant extérieurement sur le soufflet (7).

2. Pompe à piston plongeur selon la revendication 1 ou 2, **caractérisée en ce que** la pression du milieu est inférieure de 0,05 à 0,2 bar, de préférence de 0,1 bar, à la pression d'arrivée du fluide régnant dans la chambre d'aspiration (4).

3. Pompe à piston plongeur selon l'une des revendications précédentes, **caractérisée en ce qu'**un dispositif de régulation (17) relié à la chambre d'aspiration (4) et à la chambre de compensation (6) est prévu, avec lequel une surveillance différentielle des pressions dans la chambre d'aspiration (4) et la chambre de compensation (6) peut être effectuée.

4. Pompe à piston plongeur selon l'une des revendications précédentes, **caractérisée en ce qu'**un moyen de détection de fuite (18), avec lequel des paramètres matériels variables du milieu peuvent être détectés, est en liaison fonctionnelle avec la chambre de compensation (6).

5. Pompe à piston plongeur selon l'une des revendications précédentes, **caractérisée en ce qu'**entre une chambre de transmission (3) recevant un vilebrequin d'une transmission et la chambre de compensation (6), il est prévu une chambre intermédiaire (16) qui est étanche par rapport à la chambre de compensation (6) et à la chambre de transmission (3).

6. Pompe à piston plongeur selon l'une des revendications précédentes, **caractérisée en ce qu'**à une tête de pompe (19) est raccordée une soupape d'homogénéisation (13) à laquelle sont associées une soupape d'aspiration (10) communiquant avec la chambre de travail (12) et une soupape de pression (11), laquelle soupape d'homogénéisation (13) communique avec la chambre de travail (12) par l'intermédiaire de la soupape de pression (11).

7. Pompe à piston plongeur selon l'une des revendications précédentes, **caractérisée en ce que** plusieurs, de préférence trois pistons plongeurs (2) disposés à une même distance angulaire les uns des autres sont maintenus sur le vilebrequin.

8. Pompe à piston plongeur selon l'une des revendications précédentes, **caractérisée en ce que** le milieu dans la chambre de compensation (6) est un gaz inerte.

9. Utilisation de la pompe à piston plongeur selon la revendication 1 pour augmenter la pression d'un fluide dans un dispositif d'homogénéisation.
